# DEMANDE DE BREVET EUROPEEN

(11) **EP 2 202 049 A1**
(43) Date de publication de la demande: **30.06.2010**
(21) Numéro de dépôt: 09178349.8
(22) Date de dépôt: 08.12.2009
(51) Int. Cl.: B29C 49/56, B29C 49/58

(54) **Installation de soufflage pour la fabrication d'un récipient à partir d'une ébauche**

(30) Priorité: 24.12.2008 FR 0859058
(71) Demandeur: SIDEL PARTICIPATIONS, 76930 Octeville-sur-Mer (FR)
(72) Inventeur: Doudement, Christophe, 76930, Octeville sur Mer (FR)
(74) Mandataire: Thibaudeau, David A. C. R.

(57) **Abrégé**

L'invention concerne une installation de soufflage (10) pour la fabrication d'un récipient à partir d'une ébauche (12), l'installation comportant un moule (20) qui délimite une cavité (18) de moulage dans laquelle est agencée une ébauche (12) émergeant par une ouverture du moule (20), une tuyère (28) de soufflage tubulaire montée coulissante entre une position relevée de repos, et une position abaissée de soufflage dans laquelle la tuyère (28) est apte à amener un fluide sous pression à l'intérieur de l'ébauche (12), au moins un moyen de verrouillage (46a) de la tuyère (28) dans sa position abaissée de soufflage, le moyen de verrouillage (46a) étant du type d'une serrure (46a) comportant une gâche (48a) et un pêne (58a) mobile qui est rappelé élastiquement vers une position de verrouillage dans la gâche.

## Description

L'invention concerne une installation de soufflage pour la fabrication d'un récipient à partir d'une ébauche.

L'invention concerne plus particulièrement une installation de soufflage pour la fabrication d'un récipient à partir d'une ébauche, l'installation comportant :
- un moule qui délimite une cavité interne de moulage dans laquelle l'ébauche est apte à être agencée de sorte qu'un col supérieur de l'ébauche émerge de la cavité du moule,
- une tuyère de soufflage qui est montée mobile, entre une position de repos dans laquelle la tuyère est agencée au dessus du col de l'ébauche, et une position de soufflage dans laquelle la tuyère coiffant le moule est apte à amener un fluide sous pression à l'intérieur de l'ébauche, et
- un dispositif de verrouillage qui comporte au moins un moyen de verrouillage de la tuyère et du moule dans ladite position de soufflage, le moyen de verrouillage comportant au moins un élément femelle porté par le moule et au moins un élément mâle de verrouillage qui, solidaire de la tuyère, est monté mobile entre :
   - une position de verrouillage dans laquelle l'élément mâle coopère avec l'élément femelle pour verrouiller la tuyère sur le moule dans sa position de soufflage, et
   - une position de déverrouillage dans laquelle l'élément mâle est dégagé de l'élément femelle pour autoriser le retour de la tuyère vers sa position de repos,

On connaît de nombreux types d'installation de soufflage, ou d'étirage-soufflage, pour la fabrication d'un récipient à partir d'une ébauche, notamment un type d'installation de soufflage comportant une tuyère dite « tuyère cloche ».

Le document FR-A-2 764 544 décrit et représente une telle installation de soufflage à tuyère cloche, pour la fabrication d'un récipient à partir d'une ébauche.

Le terme « ébauche » vise non seulement une préforme mais également un récipient intermédiaire ayant subi un ou plusieurs soufflages préalables.

Le récipient creux final tel qu'une bouteille, un flacon, etc. est obtenu à partir d'une ébauche en matière thermoplastique, notamment en PET (polyéthylène téréphtalate).

De façon générale, l'ébauche est préalablement ramollie par chauffage par un four prévu à cet effet, puis elle est agencée dans une cavité de moulage délimitée par le moule de l'installation de soufflage, de sorte que le col de l'ébauche émerge de la cavité de moulage du moule.

La tuyère mobile est ensuite entraînée en déplacement verticalement vers le bas depuis sa position relevée de repos, jusqu'à sa position abaissée de soufflage dans laquelle la cloche de la tuyère coiffe le col de l'ébauche et la lèvre annulaire d'étanchéité de la cloche est en appui sur la face horizontale supérieure du moule.

Un fluide, généralement de l'air sous haute pression, est injecté à l'intérieur de l'ébauche au moyen de la tuyère, afin de souffler l'ébauche et de plaquer la matière contre la paroi de la cavité de moulage du moule, pour obtenir le récipient.

La cloche de la tuyère est plaquée contre la face supérieure du moule avec une force supérieure à la force de répulsion générée par la pression du fluide de soufflage, de sorte que l'ébauche est isolée hermétiquement et communique uniquement avec la cloche de la tuyère.

A cet effet, le moule est porté par un premier support et la tuyère est portée par un second support mobile, par exemple un bras de support.

Ces supports sont généralement robustes et lourds afin de pouvoir exercer l'un vers l'autre une force suffisamment élevée pour plaquer contre le moule la cloche de la tuyère dans sa position de soufflage.

L'inertie engendrée par le déplacement de tels supports limite la cadence de l'installation, c'est à dire le temps de cycle nécessaire pour fabriquer un récipient.

Pour pallier à ce problème, le document FR-A-2 848 905 décrit une installation de soufflage à tuyère cloche, qui comporte des moyens de verrouillage par attraction mutuelle de la tuyère et du moule.

Selon un exemple de réalisation de cette installation, les moyens de verrouillage comportent au moins un logement femelle, délimité par une barrette d'accrochage qui s'étend depuis la face supérieure du moule.

De façon complémentaire, les moyens de verrouillage comportent un élément mâle de la forme d'un doigt courbe qui est monté pivotant sur la tuyère, et qui est apte à être commandé entre une position de déverrouillage dans laquelle la tuyère est libre de coulisser verticalement, et une position de verrouillage dans laquelle une portion interne concave du doigt est engagée sous la barrette, afin d'exercer un effort continu pour rapprocher la tuyère vers le moule et les verrouiller solidairement l'un à l'autre.

Ces moyens de verrouillage sont efficaces, mais ils nécessitent un apport important en énergie motrice.

En effet, une pression doit être exercée sur le doigt pendant toute la durée de soufflage du récipient, pour que le doigt s'oppose à la force de répulsion de la tuyère et du moule, générée par la pression du fluide de soufflage.

De plus, de tels moyens de solidarisation nécessitent de commander successivement le déplacement du doigt une première fois, lorsque la tuyère a atteint sa position abaissée de soufflage, pour entraîner le doigt depuis sa position de déverrouillage vers sa position de verrouillage afin de verrouiller la tuyère solidairement au moule et une seconde fois, pour entraîner inversement le doigt depuis sa position de verrouillage vers sa position de déverrouillage afin de déverrouiller la tuyère et libérer le moule pour en extraire le récipient résultant du soufflage de l'ébauche.

Or, cette double commande nécessite un laps de temps qui allonge substantiellement le temps de cycle de fabrication d'un récipient, au détriment de la cadence de production et donc des coûts.

L'invention propose de résoudre notamment ces problèmes, au moyen d'une installation de soufflage qui comporte des moyens de verrouillage automatique de la tuyère sur le moule qui sont fiables, simple et rapide, et dont le fonctionnement nécessite de surcroît peu d'énergie.

Dans ce but, l'invention propose une installation de soufflage du type décrit précédemment, **caractérisé en ce que** le moyen de verrouillage comporte un premier moyen de rappel de l'élément mâle vers sa position de verrouillage, et en ce que l'élément mâle comporte une surface d'actionnement qui, au cours du déplacement de la tuyère vers sa position de soufflage, coopère avec une surface complémentaire de commande solidaire du moule de manière contraindre mécaniquement l'élément mâle vers sa position de déverrouillage à l'encontre du premier moyen de rappel, ledit élément mâle étant rappelé automatiquement vers sa position de verrouillage lorsque la tuyère occupe sa position de soufflage.

Selon d'autres caractéristiques de l'invention :
- le moyen de verrouillage comporte un moyen d'actionnement qui est apte à entraîner l'élément mâle depuis sa position de verrouillage jusqu'à sa position de déverrouillage, à l'encontre du premier moyen de rappel ;
- le moyen de verrouillage est équipé d'un levier qui s'étend globalement verticalement et qui comporte :
   -- un tronçon central qui est monté pivotant sur la tuyère autour d'un axe horizontal perpendiculaire à l'axe de déplacement de la tuyère,
   -- un tronçon inférieur à l'extrémité duquel est agencé l'élément mâle,
   -- un tronçon supérieur sur lequel ledit moyen d'actionnement agit pour faire pivoter le levier, afin d'entraîner l'élément mâle depuis sa position de verrouillage jusqu'à sa position de déverrouillage ;
- le premier moyen de rappel de l'élément mâle comporte un premier ressort qui est interposé entre la tuyère et le tronçon inférieur du levier, afin d'exercer un effort de rappel élastique sur le levier pour rappeler élastiquement l'élément mâle vers sa position de verrouillage ;
- le moyen d'actionnement est un piston qui, sous l'effet d'un fluide sous pression, coulisse selon un axe C horizontal perpendiculaire à l'axe B de pivotement du levier entre :
   - une première position libre dans laquelle le piston est escamoté, de sorte que l'élément mâle est contraint dans sa position de verrouillage par le premier moyen de rappel, et
   - une seconde position de travail dans laquelle le piston exerce une force motrice sur le levier, de sorte que l'élément mâle est entraîné dans sa position de déverrouillage par pivotement du levier à l'encontre du premier moyen de rappel ;
- la tuyère comporte un conduit d'alimentation qui s'étend depuis la chemise du piston, jusqu'au puits de la tuyère, de sorte que le fluide sous pression destiné à provoquer le coulissement du piston est constitué par le fluide sous pression qui est amené par la tuyère pour le soufflage de l'ébauche ;
- le piston coulisse depuis sa première position de repos vers sa seconde position de travail lorsque la pression du fluide dans la chemise est supérieure à une valeur de pression seuil et ladite valeur de pression seuil est atteinte lorsque, le soufflage de l'ébauche étant achevé, le fluide sous pression amené dans la tuyère y provoque une surpression ;
- pour alimenter en fluide sous pression le moyen d'actionnement, la tuyère comporte un conduit d'alimentation en fluide sous pression, qui s'étend depuis un orifice d'entrée agencé dans une face périphérique de la tuyère jusqu'à une chemise qui est délimitée par la tuyère et dans laquelle est monté coulissant le piston ;
- le tronçon supérieur du levier délimite une lumière à travers laquelle s'étend un raccord horizontal dont une première extrémité est reliée à l'orifice d'entrée du conduit d'alimentation, et une seconde extrémité opposée est apte à être reliée à une source externe de fluide sous pression ;
- l'installation de soufflage comporte un insert qui est monté coulissant verticalement dans la tuyère entre une position basse vers laquelle l'insert est rappelé élastiquement par un moyen de rappel, et une position haute dans laquelle l'insert est en appui contre le col de l'ébauche, à l'encontre du moyen de rappel, afin d'éviter que le col soit agencé de travers par rapport à l'ouverture du moule ;
- l'ensemble formé par l'insert et le moyen de rappel constitue un moyen de rappel élastique de la tuyère depuis sa position abaissée de soufflage, vers sa position relevée de repos ;
- l'installation comporte un plan de symétrie médian vertical qui passe par l'axe vertical de déplacement de la tuyère, de sorte que l'installation comporte au moins deux moyens de verrouillage qui sont agencés symétriquement selon ledit plan.

D'autres caractéristiques et avantages de l'invention apparaîtront à la lecture de la description détaillée qui suit pour la compréhension de laquelle on se reportera aux dessins annexés dans lesquels :
- la figure 1 est une vue en section selon un axe vertical, illustrant partiellement une installation de soufflage d'une ébauche, qui représente, en position relevée de repos, une tuyère munie d'un dispositif de verrouillage selon l'invention comportant une première et une seconde serrures pour le verrouillage de la tuyère et du moule ;
- la figure 2 est une vue similaire à celle de la figure 1, illustrant, pour chaque serrure, un élément mâle formant un pêne et un élément femelle formant une gâche au cours du verrouillage automatique de la serrure, lorsque la tuyère est entraînée vers sa position abaissée de soufflage ;
- la figure 3 est une vue similaire à celle de la figure 1, illustrant la tuyère de la figure 1 dans sa position abaissée de soufflage et le pêne de chaque serrure dans une position de verrouillage de la tuyère dans la gâche associée du moule ;
- la figure 4 est une vue similaire à celle de la figure 1, illustrant la tuyère de la figure 1 dans sa position abaissée de soufflage, et le pêne de chaque serrure dans une position de déverrouillage de la tuyère ;
- la figure 5 est une vue de détail de la figure 1 , illustrant la gâche et le pêne de la première serrure de la figure 1 ;
- la figure 6 est une vue similaire à celle de la figure 1, illustrant une variante de réalisation de l'installation de soufflage de la figure 1, qui est adaptée pour le soufflage d'une ébauche de grande taille.

On utilisera à titre non limitatif les orientations longitudinale, verticale et transversale selon le trièdre L, V, T représenté aux figures.

On adoptera aussi les termes horizontal et vertical, sans référence à la gravité terrestre, les termes gauche et droite en référence à la partie gauche et à la partie droite des figures respectivement, et les termes supérieur et inférieur en référence à la direction verticale du repère L, V, T.

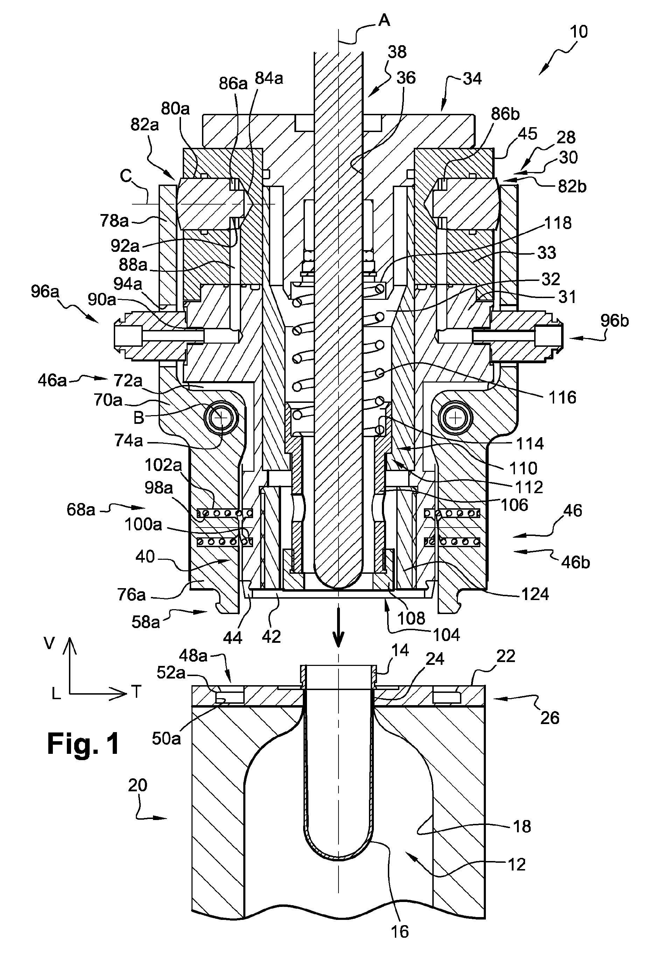

On a représenté à la figure 1 une installation d'étirage soufflage 10 pour la fabrication d'un récipient à partir d'une ébauche 12 en matière thermoplastique, par exemple en PET (polyéthylène téréphtalate).

A titre non limitatif, l'ébauche 12 peut être une préforme, c'est à dire un récipient intermédiaire formé au préalable dans un autre moule. Toutefois, l'usage général tend à faire des termes "ébauche" et "préforme" des synonymes.

L'installation de soufflage 10 illustrée aux figures présente une symétrie générale de conception par rapport à un plan de symétrie passant par l'axe A vertical médian et par le centre de l'installation de soufflage 10.

Les éléments identiques de l'installation de soufflage 10 sont désignés par les mêmes références indicées « a » ou « b ».

L'ébauche 12 comporte un col 14 annulaire supérieur, ou goulot, et un corps 16 inférieur qui s'étend verticalement selon l'axe A vertical dans une cavité 18 interne de moulage délimitée par un moule 20 (représenté partiellement aux figures).

La cavité 18 de moulage est ici de la forme d'une bouteille et elle débouche verticalement vers le haut dans une face horizontale supérieure 22 du moule 20 par une ouverture 24.

De préférence, la face supérieure 22 du moule 20 est constituée par une plaque 26 qui est rapportée sur le dessus du moule 20.

La plaque 26 rapportée est constituée de deux demi-plaques pour permettre l'ouverture des deux coquilles du moule 20 du type "en portefeuille", pour permettre l'extraction de la bouteille après soufflage.

Avantageusement, la réalisation de la plaque 26 et du moule 20 en deux parties solidaires mais distinctes permet de réaliser chacune d'elles dans un matériau donné, la plaque 26 étant de préférence réalisée dans un matériau de plus grande résistance pour limiter l'usure de la face supérieure 22.

Toutefois, à titre non limitatif, la plaque 26 peut être réalisée venue de matière, en une seule pièce, avec le moule 20.

Après avoir été chauffée, l'ébauche 12 est amenée à l'aplomb de l'ouverture 24 du moule 20 puis elle est introduite dans le moule 20, ici par introduction à la verticale de l'ouverture 24.

Comme on peut le voir à la figure 1 , après l'introduction de l'ébauche 12 dans le moule 20, le col 14 de l'ébauche 12 repose verticalement sur la face supérieure 22 du moule 20, de sorte que le col 14 émerge vers le haut depuis l'ouverture 24 du moule 20, c'est-à-dire en saillie par rapport au plan horizontal de la face supérieure 22.

L'installation de soufflage 10 comporte une tuyère 28 de soufflage pour injecter un fluide, ici de l'air sous pression, dans l'ébauche 12 afin de la souffler et la transformer en un récipient creux, par exemple ici une bouteille.

La tuyère 28 comporte un corps 30 sensiblement tubulaire qui s'étend verticalement selon l'axe A et qui délimite circonférentiellement un puits 32 cylindrique autour de l'axe A.

La tuyère 28 comporte un bouchon 34 supérieur qui est agencé à une extrémité supérieure du puits 32 et qui délimite un orifice 36 autour de l'axe A, pour le passage d'une tige d'étirage 38 verticale.

La tige d'étirage 38 est montée mobile verticalement de bas en haut dans le puits 32 de la tuyère 28, entre une position haute de repos représentée à la figure 1, dans laquelle la tige d'étirage 38 s'étend dans le puits 32 de la tuyère 28, et une position basse d'étirage (non représentée) dans laquelle l'extrémité libre de la tige d'étirage 38 pénétrant par le col 14 s'étend verticalement à l'intérieur de l'ébauche 12 et du moule 20, de façon à appuyer sur le fond de l'ébauche 12 pour étirer l'ébauche 12 et faciliter la formation par soufflage du récipient.

La tige d'étirage 38 est par exemple entraînée en déplacement vertical au moyen d'un vérin (non représenté).

Ainsi, la tige d'étirage 38 permet d'étirer mécaniquement le corps 16 de l'ébauche 12 en même temps que celui-ci est déformé par soufflage.

L'agencement et le fonctionnement d'une telle tuyère de soufflage sont par exemple décrits dans le document FR-A-2 764 544, auquel on se reportera pour plus de détails.

Selon un autre aspect, le puits 32 délimité par le corps 30 de la tuyère 28 conforme, à son extrémité verticale inférieure, une cloche 40 qui s'étend circonférentiellement autour de l'axe A.

La cloche 40 comporte un orifice de soufflage 42 inférieur qui est délimité par des moyens d'étanchéité, tels qu'une lèvre 44 annulaire d'étanchéité.

De préférence, la lèvre 44 est ici un joint annulaire d'étanchéité, par exemple en élastomère, qui est fixé à une extrémité libre inférieure de la cloche 40 par coopération de formes.

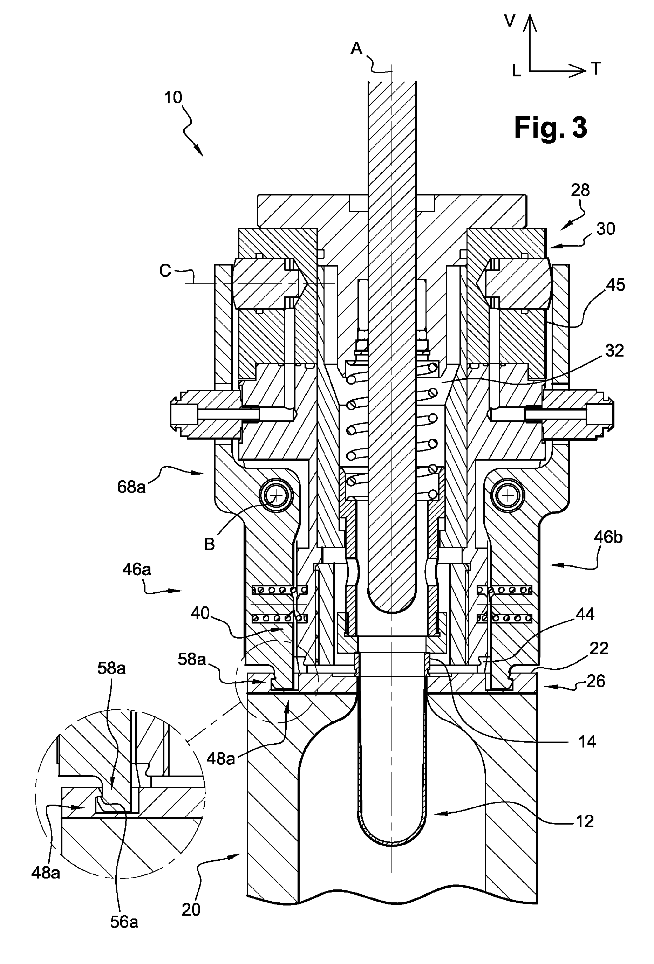

La tuyère 28 est montée mobile selon l'axe A vertical, entre une position relevée de repos, représentée à la figure 1 , dans laquelle la cloche 40 est agencée à l'aplomb, ici verticalement au dessus, du col 14 de l'ébauche 12, et une position abaissée de soufflage, représentée à la figure 3, dans laquelle la cloche 40 coiffe le col 14 de l'ébauche 12.

Lorsque la tuyère 28 occupe sa position abaissée de soufflage, la lèvre 44 annulaire d'étanchéité de la cloche 40 est sollicitée verticalement vers le bas afin d'être en appui sur la face supérieure 22 de la plaque 26 supérieure du moule 20 et d'assurer ainsi l'étanchéité pour amener l'air sous pression à l'intérieur de l'ébauche 12 afin de souffler l'ébauche 12.

A cet effet, le corps 30 de la tuyère 28 délimite un conduit de soufflage (non représenté) qui s'étend depuis un orifice d'entrée d'air (non représenté) agencé dans une face périphérique 45 du corps 30 de la tuyère 28, jusqu'à un orifice de sortie d'air (non représenté) débouchant dans le puits 32, ou la cloche 40, de la tuyère 28, afin d'alimenter en air sous pression la cloche 40.

L'installation de soufflage 10 est équipée d'un dispositif de verrouillage 46 comportant au moins un premier moyen de verrouillage 46a pour le verrouillage automatique de la tuyère 28 sur le moule 20, dans sa position abaissée de soufflage.

Le premier moyen de verrouillage 46a, dit par analogie première serrure, comporte un premier élément femelle 48a formant un logement et qui est de préférence réalisé dans la plaque 26 supérieure du moule 20, ledit premier élément femelle étant encore appelé gâche 48a de verrouillage par la suite.

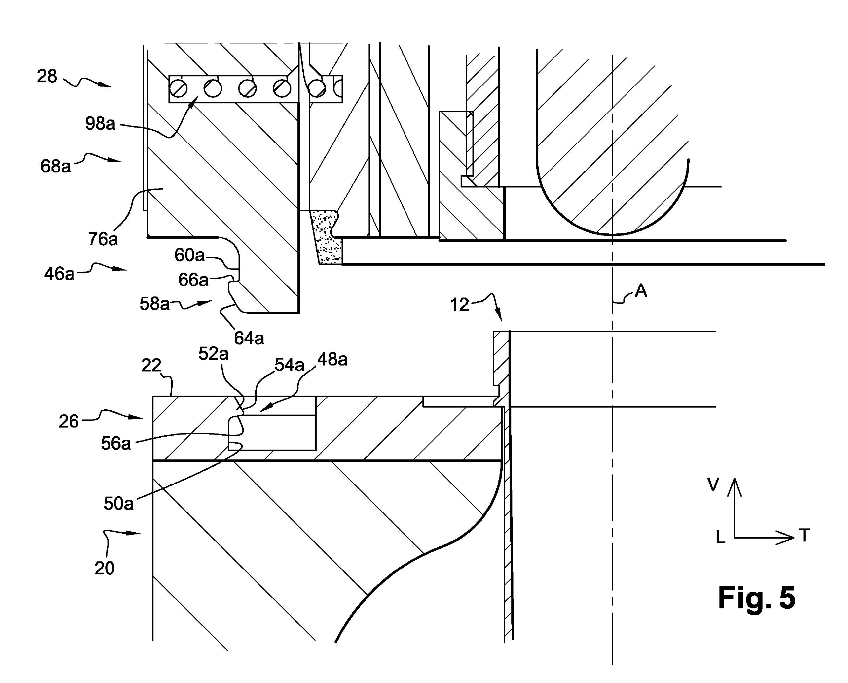

Pour la description qui suit on se reportera avantageusement à la figure 5 qui illustre en détail le premier moyen de verrouillage 46a du dispositif de verrouillage 46.

La gâche 48a est de section transversale globalement rectangulaire, ouverte verticalement vers le haut, et elle comporte une paroi interne gauche 50a verticale.

De plus, la gâche 48a est délimitée verticalement vers le haut par un cran 52a de verrouillage, qui s'étend globalement horizontalement et transversalement vers l'axe A depuis la paroi interne 50a verticale de la gâche 48a, c'est-à-dire de la gauche vers la droite selon la figure 5.

Le cran 52a de verrouillage est délimité par une surface de commande 54a inclinée en pente vers l'intérieur de la gâche 48a, de la forme d'une rampe, et par une face de verrouillage 56a inférieure qui s'étend horizontalement en vis à vis du fond de la gâche 48a.

De façon complémentaire, le premier moyen de verrouillage, ou première serrure 46a, comporte un élément mâle 58a qui est d'une forme complémentaire à celle du premier élément femelle formant la première gâche 48a associée, ledit élément mâle étant encore appelé pêne 58a de verrouillage par la suite.

Le pêne 58a est délimité par une surface d'actionnement 64a, de la forme d'un chanfrein 64a inférieur, qui est destinée à coopérer avec la surface de commande 54a du cran 52a de la première gâche 48a, et par une face supérieure horizontale 66a de verrouillage qui est destinée à coopérer avec la face de verrouillage 56a complémentaire du cran 52a de la première gâche 48a.

Le terme chanfrein 64a désigne une surface oblique qui est destinée à supprimer une arête vive. Cette surface oblique est généralement plane, mais elle peut aussi être de forme convexe, concave ou sphérique.

Le pêne 58a s'étend horizontalement, de la droite vers la gauche selon la figure 5, depuis une extrémité libre inférieure d'un premier levier 68a.

Le pêne 58a est monté mobile sur la tuyère 28, par l'intermédiaire du levier 68a associé, respectivement entre une position de verrouillage et une position de déverrouillage.

Lorsque le pêne 58a occupe sa position de verrouillage, illustrée à la figure 3, le pêne 58a est engagé dans la première gâche 48a, de sorte que la face supérieure horizontale 66a de verrouillage du pêne 58a est en appui vertical vers le haut contre la face de verrouillage 56a du cran 52a de la première gâche 48a, pour s'opposer au coulissement vertical vers le haut de la tuyère 28, et de verrouiller ainsi la tuyère 28 dans sa position abaissée de soufflage dans laquelle la tuyère 28 coopère de façon étanche avec le moule 20.

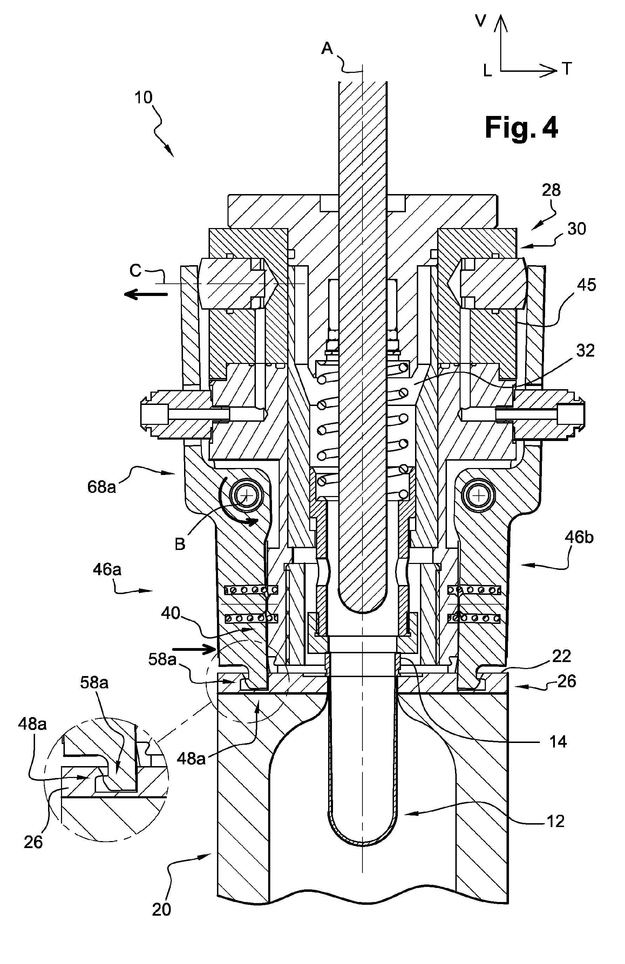

Lorsque le pêne 58a occupe sa position de déverrouillage, illustrée à la figure 4, le pêne 58a est dégagé de la gâche 48a associée, pour permettre le coulissement vertical vers le haut de la tuyère 28 vers sa position relevée de repos.

Le premier levier 68a s'étend globalement verticalement le long de la face périphérique 45 du corps 30 de la tuyère 28.

Le premier levier 68a comporte un tronçon central 70a qui est monté pivotant sur un arbre 74a du corps 30 de la tuyère 28 autour d'un axe B horizontal longitudinal qui est perpendiculaire à l'axe A vertical de déplacement de la tuyère 28.

A cet effet, le corps 30 de la tuyère 28 délimite une encoche 72a latérale débouchant transversalement, dans laquelle s'étend l'arbre 74a longitudinalement selon l'axe B de pivotement.

De plus, le premier levier 68a comporte un tronçon inférieur 76a à l'extrémité inférieure duquel est agencé le pêne 58a.

Enfin, le premier levier 68a comporte un tronçon supérieur 78a sur lequel agit un moyen d'actionnement qui exerce une force motrice de pivotement du premier levier 68a, afin d'entraîner le pêne 58a en déplacement par un effet levier.

Le moyen d'actionnement, qui est associé à la première serrure 46a de verrouillage, est un premier piston 82a qui est monté coulissant dans une chemise 80a borgne.

La chemise 80a s'étend dans le corps 30 de la tuyère 28, selon un axe C transversal, perpendiculaire à l'axe de pivotement du premier levier 68a.

La chemise 80a débouche transversalement dans la face périphérique 45 du corps 30 de la tuyère 28, en vis à vis du tronçon supérieur 78a du premier levier 68a.

De plus, la chemise 80a borgne est délimitée transversalement par un fond 84a, de sorte que le fond 84a et une face arrière du piston 82a délimitent entre eux une chambre 86a à géométrie variable.

De façon complémentaire, un conduit d'alimentation 88a en fluide, ici de l'air sous pression à 7 bars, s'étend dans le corps 30 de la tuyère 28.

Le conduit d'alimentation 88a, globalement en forme de "L", comporte un premier tronçon transversal qui débouche dans la face périphérique 45 verticale du corps 30 de la tuyère 28 par un orifice d'entrée 90a, et un second tronçon vertical qui débouche dans la chambre 86a par un orifice de sortie 92a.

Afin de faciliter l'usinage du conduit d'alimentation 88a, le corps 30 de la tuyère 28 est réalisé en deux parties, une partie supérieure 33 qui est fixée et emboîtée de façon superposée sur une partie inférieure 31 du corps 30.

Comme on peut le voir à la figure 1, l'orifice d'entrée 90a est agencé verticalement au dessous du premier piston 82a.

Le tronçon supérieur 78a du premier levier 68a délimite une lumière 94a à travers laquelle s'étend un raccord 96a horizontal dont une première extrémité est reliée à l'orifice d'entrée 90a, et une seconde extrémité opposée est apte à être reliée à une source externe d'air sous pression (non représentée), par exemple au moyen d'un conduit souple (non représenté).

Ainsi, lorsque de l'air sous pression est injecté dans la chambre 86a par le conduit d'alimentation 88a, le piston 82a est entraîné en coulissement, depuis une position libre représentée aux figures 1 à 3, dans laquelle le piston 82a est escamoté dans sa chemise 80a, jusqu'à une position de travail représentée à la figure 4, dans laquelle le piston 82a est au moins en partie sorti de la chemise 80a.

Au cours de son déplacement vers sa position de travail, le piston 82a coulisse transversalement vers le levier 68a sous l'effet de l'air sous pression injecté dans la chambre 86a, le piston 82a exerçant alors une force motrice de pivotement sur le tronçon supérieur 78a du levier 68a.

L'installation de soufflage 10 comporte un dispositif de commande (non représenté) du piston 82a, qui est apte à commander sélectivement l'injection d'air dans la chambre 86a pour commander le déplacement du piston 82a vers sa position de travail.

La force motrice de pivotement, exercée sur le tronçon supérieur 78a du levier 68a par le piston 82a, provoque le pivotement du levier 68a autour de son axe B longitudinal de pivotement, de sorte que, lorsque la tuyère 28 occupe sa position abaissée de soufflage, le pêne 58a est libéré, c'est-à-dire entraîné depuis sa position de verrouillage de la tuyère 28 jusqu'à sa position de déverrouillage de la tuyère 28, comme on peut le voir à la figure 4.

De plus, la tuyère 28 comporte un ressort hélicoïdal 98a formant un premier moyen de rappel du pêne 58a vers sa position de verrouillage, le premier moyen de rappel agissant à cet effet à l'encontre du pivotement du levier 68a.

Le ressort hélicoïdal 98a s'étend transversalement depuis une première extrémité qui est reçue dans une première gorge 100a annulaire formée dans la face périphérique 45 du corps 30 de la tuyère 28, jusqu'à une seconde extrémité qui est reçue dans une seconde gorge 102a annulaire formée dans le tronçon inférieur 76a du premier levier 68a.

Ainsi, le ressort hélicoïdal 98a est interposé transversalement entre la face externe du corps 30 de la tuyère 28, afin d'exercer un effort de rappel élastique sur le levier 68a, pour rappeler élastiquement le pêne 58a vers sa position de verrouillage.

Avantageusement, le ressort hélicoïdal 98a est dimensionné pour exercer un effort de rappel suffisant pour faire coulisser le piston 82a depuis sa position de travail jusqu'à sa position escamotée, lorsque le piston 82a n'est plus commandé dans sa position de travail par le dispositif de commande associé.

Le verrouillage et le déverrouillage de la tuyère 28 sur le moule 20, au cours d'un cycle de soufflage d'une ébauche 12, est représenté et décomposé de façon chronologique aux figures 1 à 4.

Selon la figure 1, la tuyère 28 en entraînée en coulissement vers le bas selon l'axe A depuis sa position relevée de repos, vers sa position abaissée de soufflage.

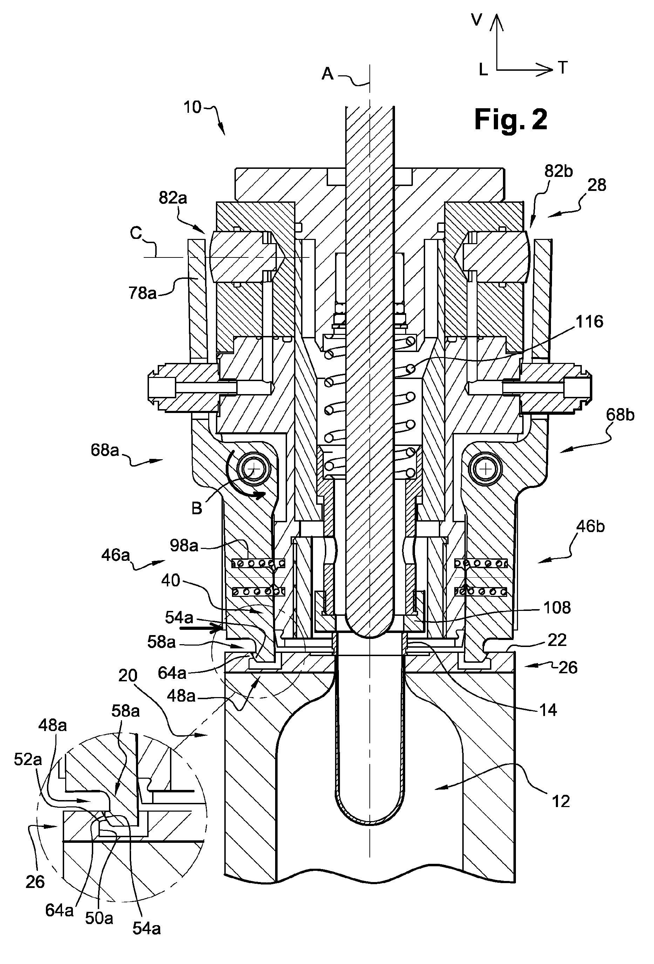

Selon la figure 2, au cours du coulissement vertical de la tuyère 28 vers sa position abaissée de soufflage, la surface d'actionnement 64a du pêne 58a coopère par glissement contre la surface de commande 54a complémentaire du cran 52a de la gâche 48a, de sorte que le pêne 58a est entraîné, ou sollicité, un instant vers sa position de déverrouillage à l'encontre du ressort hélicoïdal 98a de rappel.

Ensuite, selon la figure 3, lorsque le pêne 58a est suffisamment descendu pour « dépasser » le cran 52a, et cesse de coopérer avec le cran 52a, la surface d'actionnement 64a du pêne 58a n'est alors plus en contact contre la surface de commande 54a du cran 52a de la gâche 48a, de sorte que le ressort hélicoïdal 98a est relâché, provoquant ainsi l'engagement automatique du pêne 58a dans sa position de verrouillage dans la gâche 48a.

Ainsi, le verrouillage automatique d'au moins la première serrure 46a du dispositif de verrouillage 46 est obtenu simultanément à l'atteinte, par la tuyère 28, de sa position abaissée de soufflage.

Dès lors, la tuyère 28 occupe sa position abaissée de soufflage dans laquelle la tuyère 28 est verrouillée sur le moule 20, c'est-à-dire que la tuyère 28 et le moule 20 étant maintenus solidairement ensemble par les moyens du dispositif de verrouillage 46, la tuyère 28 est apte à injecter de l'air sous pression dans l'ébauche 12 logée dans le moule 20 sans que ladite injection sous pression ne puisse provoquer leur séparation, ni affecter l'étanchéité établie par le moyen d'étanchéité 44.

Enfin, selon la figure 4, le piston 82a est commandé en déplacement, depuis sa position libre, jusqu'à sa position de travail, de sorte que le piston 82a exerce une force motrice de pivotement sur le tronçon supérieur 78a du levier 68a, grâce à quoi le levier 68a est entraîné en pivotement autour de son axe B de pivotement, pour entraîner le pêne 58a depuis sa position de verrouillage de la tuyère 28 jusqu'à sa position de déverrouillage de la tuyère 28.

Grâce à l'invention, la tuyère 28 est verrouillée automatiquement dès qu'elle atteint sa position abaissée de soufflage.

Ainsi, le pêne 58a de la serrure 46a ne nécessite pas d'être commandé en déplacement vers sa position de verrouillage, grâce à quoi le temps de cycle de soufflage d'un récipient est diminué.

De plus, le pêne 58a n'est pas commandé dans sa position de verrouillage, ce qui permet d'économiser de l'énergie par rapport aux dispositifs de verrouillage selon l'état de la technique.

Selon un autre aspect, l'installation de soufflage 10 comporte un moyen de mise en position 104 du col 14 de l'ébauche 12, afin d'éviter que le col soit agencé de travers par rapport à l'ouverture 24 du moule 20.

En effet, lorsque l'ébauche 12 introduite dans le moule 20, l'ébauche 12 est susceptible de rebondir sur la face supérieure 22 du moule 20 et tend ainsi à se désaxer.

Le moyen de mise en position 104 est décrit en détail dans le document FR-A-2912678.

Le moyen de mise en position 104 comporte un insert 106 cylindrique qui s'étend verticalement dans le puits 36 de la tuyère 28, selon l'axe A vertical de coulissement de la tuyère 28, autour de la tige d'étirage 38.

Comme l'illustre la figure 1 , le tronçon inférieur de l'insert 106 comporte, à son extrémité libre, une collerette 108 annulaire d'appui qui est agencée en regard du col 14 de l'ébauche 12.

De plus, le tronçon supérieur de l'insert 106 délimite un épaulement 110 qui fait saillie radialement et qui est en appui vertical vers le bas sur un siège annulaire 112 complémentaire du puits 32 de la tuyère 28.

De même, le tronçon supérieur de l'insert 106 délimite un lamage 114 qui s'étend radialement autour de l'axe A, à l'intérieur de l'insert 106.

Enfin, le moyen de mise en position 104 comporte un ressort hélicoïdal 116 vertical d'axe A, qui est interposé verticalement entre le bouchon 34 et l'insert 106.

Le ressort hélicoïdal 116 comporte une extrémité supérieure qui est reçue dans une gorge 118 inférieure annulaire du bouchon 34, jusqu'à une extrémité inférieure qui est en appui vertical sur le lamage 114 de l'insert 106.

L'insert 106 est monté coulissant verticalement selon l'axe A dans le puits 32, et en partie dans la cloche 40 de la tuyère 28, entre une position basse de repos illustrée à la figure 1, dans laquelle l'épaulement 110 de l'insert 106 est en appui vertical sur le siège 112 de la tuyère 28 formant butée, et une position haute, dans laquelle l'épaulement 110 de l'insert 106 est espacé verticalement du siège 112 de la tuyère 28, de sorte que le ressort hélicoïdal 116 est comprimé.

Au sortir du four, l'ébauche 12 est amenée à l'aplomb de l'ouverture 24 puis elle est introduite dans le moule 20.

La tuyère 28 descend rapidement pour venir en position basse se plaquer contre le moule 20 en vue du soufflage.

Dans l'hypothèse où l'ébauche rebondit sur le moule 20, elle vient heurter par son col 14 la collerette 108 d'appui de l'insert 106, comme on peut le voir à la figure 2.

Une partie de l'énergie du choc est absorbée par la compression du ressort 116 et le recul simultané de l'insert 106, lequel agit ainsi à la manière d'un amortisseur vis-à-vis de l'ébauche 12 et plaque l'ébauche contre la face supérieure 22 du moule 20.

De plus, lorsque la tuyère 28 occupe sa position basse de soufflage, l'insert 106 occupe sa position haute de rappel de la tuyère 28, le ressort hélicoïdal 116 exerce alors un effort vertical vers le haut sur la tuyère 28, grâce à quoi la face supérieure horizontale 66a du pêne 58a est plaquée élastiquement sur la face de verrouillage 56a du cran 52a de la première gâche 48a, de sorte que le pêne 58a est verrouillé sans jeu vertical dans la gâche 48a.

Par symétrie selon le plan de symétrie générale passant par l'axe A, l'installation de soufflage 10 comporte un dispositif de verrouillage 46 qui est équipé d'une seconde serrure 46b pour le verrouillage automatique de la tuyère 28 sur le moule 20, qui est identique à la première serrure 46a décrite ci-dessus.

La seconde serrure 46b est agencée symétriquement à la première serrure 46a, et elle comporte des éléments identiques qui sont désignés par les mêmes références indicées par la lettre « b ».

L'installation de soufflage 10 décrite ci-dessus est plus particulièrement destinée à fabriquer un récipient à partir d'une ébauche 12 dite de « petite taille ».

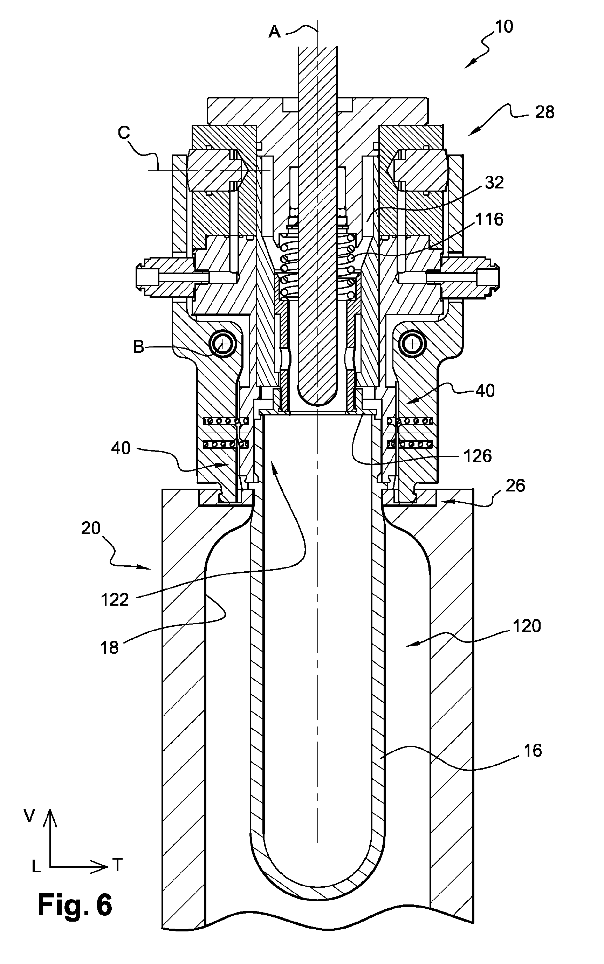

Toutefois, selon une première variante de réalisation représentée à la figure 6, l'installation de soufflage 10 peut être sensiblement transformée pour être adaptée à fabriquer un récipient à partir d'une ébauche 120 dite de « grande taille », c'est à dire une ébauche qui comporte un col 122 plus haut et d'un diamètre supérieur au col 14 de l'ébauche 12 dite de petite taille.

A cet effet, comme on peut le voir à la figure 1, la cloche 40 de la tuyère 28 comporte une douille amovible 124 filetée qui est vissée sur la paroi cylindrique interne de la cloche 40, et qui est apte à être dévissée de sorte que la cloche 40 peut coiffer le col 122 de l'ébauche 120 de grande taille.

De plus, la collerette 108, qui est agencée à l'extrémité libre du tronçon inférieur de l'insert 106, est vissée sur l'insert 106, grâce à quoi il est possible de remplacer la collerette 108 par une autre collerette de taille différente, par exemple par une collerette 126 dite de « grande taille » comme l'illustre la figure 6.

Ainsi, la grande collerette 126 est apte à être en appui vertical contre le col 122 de la grande ébauche 120, de façon à plaque l'ébauche 120 contre la face supérieure du moule 20.

Selon une autre variante non représentée, le corps 30 de la tuyère 28 comporte un conduit supplémentaire d'alimentation en air, qui s'étend dans le corps 30 dans un plan transversal autour de l'axe A de la tuyère 28, et qui raccorde le conduit d'alimentation 88a à la chambre 86b du second piston 82b, grâce à quoi il est possible de supprimer un raccord, par exemple le second raccord 96b.

Le conduit supplémentaire d'alimentation est par exemple une gorge qui est interposée verticalement entre la partie inférieure 31 et la partie supérieure 33 du corps 30 de la tuyère 28.

Selon une autre variante de réalisation non représentée, la tuyère 28 comporte un conduit d'alimentation qui s'étend depuis la chemise 80a du piston 82a, jusqu'au puits 32 de la tuyère 28, de sorte que le fluide sous pression destiné à provoquer le coulissement du piston 82a est constitué par le fluide sous pression qui est amené par la tuyère 28 pour le soufflage de l'ébauche 12.

Selon cette variante, le piston 82a coulisse depuis sa position de repos vers sa position de travail lorsque la pression du fluide dans la chemise 80a est supérieure à une valeur de pression seuil.

La valeur de pression seuil est atteinte lorsque le soufflage de l'ébauche 12 est achevé, le fluide sous pression amené dans la tuyère 28 provoquant alors une surpression dans la tuyère 28.

Le conduit d'alimentation est dimensionné de sorte que la valeur de pression seuil soit atteinte au moment où la surpression est provoquée dans la tuyère 28.

Bien entendu, l'invention n'est nullement limitée à une installation de soufflage à tuyère cloche, représentée et décrite uniquement à titre d'exemple non limitatif, de sorte que l'invention est aussi susceptible d'être mise en oeuvre dans une installation de soufflage comportant une tuyère « classique », dont l'extrémité libre est insérée dans ou sur le col de l'ébauche.

Il sera aussi compris que des inversions mécaniques simples peuvent constituer des variantes de réalisation de l'invention.

Par exemple, la gâche 48a de la première serrure 46a peut être réalisée dans la tuyère 28, et le pêne 58a peut être monté mobile sur le moule 20.

De plus, la serrure 46a peut être un élément rapporté sur le moule 20, par exemple une broche en U inversé, dont les branches s'étendent verticalement depuis la face supérieure 22 du moule 20.

## Revendications

1. Installation de soufflage (10) pour la fabrication d'un récipient à partir d'une ébauche (12), l'installation comportant :
- un moule (20) qui délimite une cavité (18) interne de moulage dans laquelle l'ébauche (12) est apte à être agencée de sorte qu'un col (14) supérieur de l'ébauche (12) émerge de la cavité (18) du moule (20),
- une tuyère (28) de soufflage qui est montée mobile, entre une position de repos dans laquelle la tuyère (28) est agencée au dessus du col (14) de l'ébauche (12), et une position de soufflage dans laquelle la tuyère (28) coiffant le moule (20) est apte à amener un fluide sous pression à l'intérieur de l'ébauche (12), et
- un dispositif de verrouillage (46) qui comporte au moins un moyen de verrouillage (46a) de la tuyère (28) et du moule (20) dans ladite position de soufflage, le moyen de verrouillage (46a) comportant au moins un élément femelle (48a) porté par le moule (20) et au moins un élément mâle (58a) de verrouillage qui, solidaire de la tuyère (28), est monté mobile entre :
• une position de verrouillage dans laquelle l'élément mâle (58a) coopère avec l'élément femelle (48a) pour verrouiller la tuyère (28) sur le moule (20) dans sa position de soufflage, et
• une position de déverrouillage dans laquelle l'élément mâle (58a) est dégagé de l'élément femelle (48a) pour autoriser le retour de la tuyère (28) vers sa position de repos,
**caractérisé en ce que** le moyen de verrouillage (46a) comporte un premier moyen de rappel (98a) de l'élément mâle (58a) vers sa position de verrouillage, **et en ce que** l'élément mâle (58a) comporte une surface d'actionnement (64a) qui, au cours du déplacement de la tuyère (28) vers sa position de soufflage, coopère avec une surface complémentaire de commande (54a) solidaire du moule (20) de manière à contraindre mécaniquement l'élément mâle (58a) vers sa position de déverrouillage à l'encontre du premier moyen de rappel (98a), ledit élément mâle (58a) étant rappelé automatiquement vers sa position de verrouillage lorsque la tuyère (28) occupe sa position de soufflage.

2. Installation de soufflage (10) selon la revendication précédente, **caractérisée en ce que** le moyen de verrouillage (46a) comporte un moyen d'actionnement (82a) qui est apte à entraîner l'élément mâle (58a) depuis sa position de verrouillage jusqu'à sa position de déverrouillage, à l'encontre du premier moyen de rappel (98a).

3. Installation de soufflage (10) selon la revendication précédente, **caractérisée en ce que** le moyen de verrouillage (46a) est équipé d'un levier (68a) qui s'étend globalement verticalement et qui comporte :
- un tronçon central (70a) qui est monté pivotant sur la tuyère (28) autour d'un axe (B) horizontal perpendiculaire à l'axe (A) de déplacement de la tuyère (28),
- un tronçon inférieur (76a) à l'extrémité duquel est agencé l'élément mâle (58a),
- un tronçon supérieur (78a) sur lequel ledit moyen d'actionnement (82a) agit pour faire pivoter le levier (68a), afin d'entraîner l'élément mâle (58a) depuis sa position de verrouillage jusqu'à sa position de déverrouillage.

4. Installation de soufflage (10) selon la revendication précédente, **caractérisée en ce que** le premier moyen de rappel (98a) de l'élément mâle (58a) comporte un premier ressort (98a) qui est interposé entre la tuyère (28) et le tronçon inférieur (76a) du levier (68a), afin d'exercer un effort de rappel élastique sur le levier (68a) pour rappeler élastiquement l'élément mâle (58a) vers sa position de verrouillage.

5. Installation de soufflage (10) selon la revendication 3, **caractérisée en ce que** le moyen d'actionnement (82a) est un piston (82a) qui, sous l'effet d'un fluide sous pression, coulisse selon un axe (C) horizontal perpendiculaire à l'axe (B) de pivotement du levier (68a) entre :
• une première position libre dans laquelle le piston (82a) est escamoté, de sorte que l'élément mâle (58a) est contraint dans sa position de verrouillage par le premier moyen de rappel (98a), et
• une seconde position de travail dans laquelle le piston (82a) exerce une force motrice sur le levier (68a), de sorte que l'élément mâle (58a) est entraîné dans sa position de déverrouillage par pivotement du levier (68a) à l'encontre du premier moyen de rappel (98a).

6. Installation de soufflage (10) selon la revendication 5, **caractérisée en ce que** la tuyère (28) comporte un conduit d'alimentation qui s'étend depuis la chemise (80a) du piston (82a), jusqu'au puits (32) de la tuyère (28), de sorte que le fluide sous pression destiné à provoquer le coulissement du piston (82a) est constitué par le fluide sous pression qui est amené par la tuyère (28) pour le soufflage de l'ébauche (12).

7. Installation de soufflage (10) selon la revendication précédente, **caractérisée en ce que** le piston (82a) coulisse depuis sa première position de repos vers sa seconde position de travail lorsque la pression du fluide dans la chemise (80a) est supérieure à une valeur de pression seuil et **en ce que** ladite valeur de pression seuil est atteinte lorsque, le soufflage de l'ébauche (12) étant achevé, le fluide sous pression amené dans la tuyère (28) y provoque une surpression.

8. Installation de soufflage (10) selon la revendication 5, **caractérisée en ce que** pour alimenter en fluide sous pression le moyen d'actionnement (82a), la tuyère (28) comporte un conduit d'alimentation (88a) en fluide sous pression, qui s'étend depuis un orifice d'entrée (90a) agencé dans une face périphérique (45) de la tuyère (58a) jusqu'à une chemise (80a) qui est délimitée par la tuyère (28) et dans laquelle est monté coulissant le piston (82a).

9. Installation de soufflage (10) selon la revendication 8, **caractérisée en ce que** le tronçon supérieur (78a) du levier (68a) délimite une lumière (94a) à travers laquelle s'étend un raccord (96a) horizontal dont une première extrémité est reliée à l'orifice d'entrée (90a) du conduit d'alimentation (88a), et une seconde extrémité opposée est apte à être reliée à une source externe de fluide sous pression.

10. Installation de soufflage (10) selon l'une quelconque des revendications précédentes, **caractérisée en ce qu'**elle comporte un insert (106) qui est monté coulissant verticalement dans la tuyère (28) entre une position basse vers laquelle l'insert (106) est rappelé élastiquement par un moyen de rappel (116), et une position haute dans laquelle l'insert (106) est en appui contre le col (14) de l'ébauche (12), à l'encontre du moyen de rappel (116), afin d'éviter que le col (14) soit agencé de travers par rapport à l'ouverture (24) du moule (20).

11. Installation de soufflage (10) selon la revendication précédente, **caractérisée en ce que** l'ensemble formé par l'insert (106) et le moyen de rappel (116) constitue un moyen de rappel élastique de la tuyère (28) depuis sa position abaissée de soufflage, vers sa position relevée de repos.

12. Installation de soufflage (10) selon l'une quelconque des revendications précédentes, **caractérisée en ce que** l'installation (10) comporte un plan de symétrie médian vertical qui passe par l'axe (A) vertical de déplacement de la tuyère (28), de sorte que l'installation (10) comporte au moins deux moyens de verrouillage (46a, 46b) qui sont agencés symétriquement selon ledit plan.
